# EUROPEAN PATENT APPLICATION

(11) **EP 3 916 281 A1**
(43) Date of publication of application: **01.12.2021**
(21) Application number: 21157589.9
(22) Date of filing: 17.02.2021
(51) Int. Cl.: F16L 33/22, F16L 25/06

(54) **ANNULAR CONNECTING ELEMENT APPLICABLE TO THE END OF A FLEXIBLE HOSE**

(30) Priority: 18.02.2020 IT 202000003185
(71) Applicant: Universaflex Group S.r.l., 43126 Parma (IT)
(72) Inventor: CRESPI, Carlo Francesco, 43126 PARMA (IT)
(74) Representative: Fanzini, Valeriano

(57) **Abstract**

An annular connecting element applicable to the end of a corresponding flexible hose comprises four stainless steel hose clamping jaws (2, 2/A, 2/B, 2/C) and one or two rings (4, 16), in which one or more tightening screws (21) are housed at 90° from each other and suitable for clamping the jaws concentrically around a flexible hose, in order to securely and reliably anchor a fitting (11) inserted inside the hose itself and, if necessary, to recover it in case of hose replacement. The annular connecting element is suitable for anchoring any type of fitting inside any flexible hose.

## Description

The present invention relates to an annular connecting element applicable to the end of a corresponding flexible hose.

Annular connecting elements are known that are applicable to the end of corresponding flexible hoses and which are joined to the same flexible hose by means of a crimping operation, which allows a high sealing reliability between the selected fitting and the flexible hose to be used.

Currently, as things stand, there are no regulations that regulate the geometry of the barbs of the fittings and of the press-on bushings that engage with retention to the respective surface of the flexible hose.

As a result, experience over time has optimized the geometry of the barbs, which are adapted to ensure and improve the sealing of the sub-layer of the hose and, at the same time, to cushion the stresses and vibrations of the plants, which have always been one of the major problems with flexible hoses.

It should be specified that while all types of fittings are provided with more or less marked barbs, the press-on bushings are substantially divided into two types: i.e. with and without barbs inside them.

Usually, it is customary to use those with the barbs in their inside in the presence of particularly stressed flexible hoses as with their geometry, they further increase their anchorage to the hose.

It is also important to point out that the barb, with its stepped geometry, is suitable for anchoring the flexible hose, while in the fittings, it does not undergo any deformation due to the crimping of the press-on bushing, the press-on bushing, if made with barbs in its inside, inevitably undergoes a more or less accentuated deformation of its internal barbs, depending on the pressing of the crimping, which crimping, if excessive, risks cutting the sub-layer of the hose and if insufficient, in the case of hoses with operations having high pressures, their extraction.

Last but not least, it is important to add that all flexible hoses, in particular those used in plants for the food and pharmaceutical industry, precisely because in contact with sanitizers, steam and often particularly aggressive liquids, require frequent replacement.

In this regard, it should be reminded that all the fittings, especially in this sector, are made of stainless steel and that once they are crimped to the flexible hose, in case of hose replacement, they cannot be recovered, with higher costs and burdens for the user industries.

With the present invention it is therefore wished to propose a new solution and/or an alternative to the solutions known up to now and in particular it is proposed to overcome one or more of the drawbacks or problems referred to above, and/or to satisfy one or more requirements referred to above and/or in any case experienced in the art, and in particular which can be deduced from the above.

In particular, the task of the invention is to eliminate the aforementioned drawbacks, by realising a specific device that allows, with a simple and reliable manoeuvre, to disassemble and reassemble the fittings of the flexible hoses, reusing them without resorting to crimping and consequently to replace the flexible hoses whenever necessary without having additional costs for the fittings.

An annular connecting element applicable to the end of a corresponding flexible hose is then provided, characterized in that it comprises four jaws, suitable for concentric clamping, all around the circumference of the flexible hose, and a fitting arranged inside the same hose.

In this way, a grip of the flexible hose is obtained which is particularly reliable.

This and other innovative aspects or respective advantageous embodiments, are however, set forth in the appended claims, the technical characteristics of which can be found, together with corresponding advantages achieved, in the following detailed description, illustrating a purely non-limiting example of the embodiment of the invention, which is made with reference to the appended drawings, in which:
- Figure 1 is a schematic sectional and exploded representation of a preferred embodiment of an annular connecting element applicable to the end of a corresponding flexible hose according to the invention;
- Figure 2 is a schematic and partial section representation of the preferred embodiment of the invention;
- Figure 3 represents the study of a detail of the preferred embodiment of the invention applied to the flexible hose;
- Figure 4 represents the optimal study of a detail of the preferred embodiment of the invention applied to the flexible hose;
- Figure 5 is a schematic sectional and exploded representation of the preferred embodiment of the invention applied to the flexible hose;
- Figure 6 is a schematic sectional representation of the preferred embodiment of the invention anchored to the flexible hose with two jaw clamping rings;
- Figure 7 is a schematic sectional representation of the preferred embodiment of the invention anchored to the flexible hose with a single jaw clamping ring;
- Figure 8 is a schematic sectional representation of the preferred embodiment of the invention in its final configuration;
- Figure 9 shows a classic weld-on fitting used in the preferred embodiment of the invention;
- Figure 10, schematically represents a female DIN fitting;
- Figure 11, schematically represents a male DIN fitting with its swivel;
- Figure 12, schematically represents a so-called Tri-CLAMP fitting.

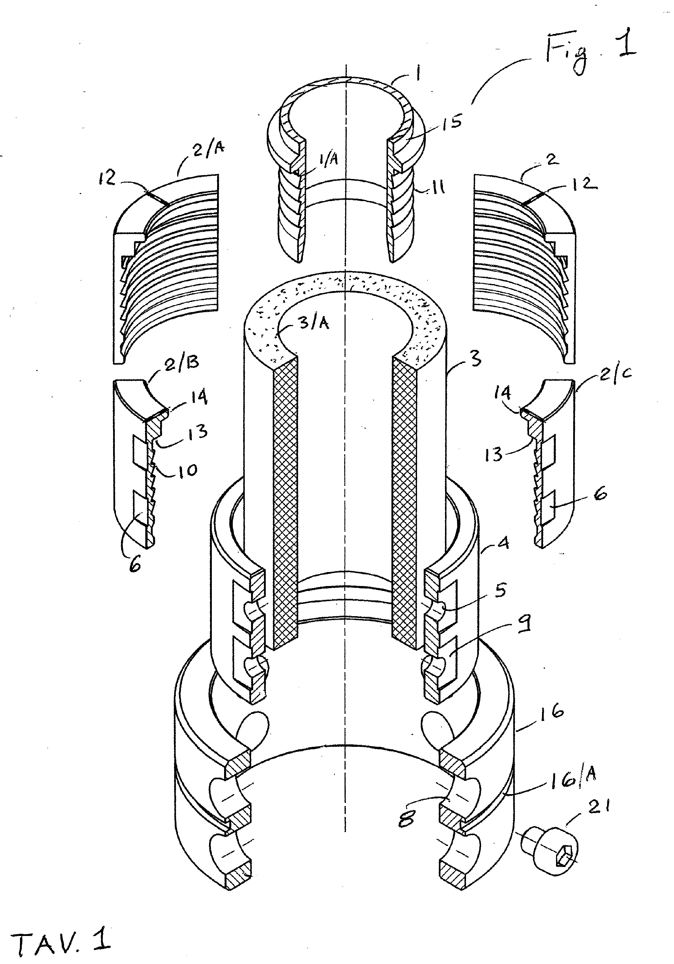

The present annular connecting element applicable to the end of a corresponding flexible hose 3, for hydraulic fittings in general, recoverable, according to the invention is visible with all its main components in Figure 1.

Advantageously, as will be nevertheless better understood from the continuation of the present description, the present annular connecting element comprises four jaws 2, 2/A, 2/B, 2/C, which are suitable for concentric clamping, all around the circumference of the flexible hose 3, and a fitting 11 arranged inside, of the same flexible hose.

With advantage, as will be nevertheless better understood from the continuation of the present description, the four jaws 2, 2, 2/A, 2/B, 2/C have an angular extension of 90°, and in particular are obtained from a metal bushing that is turned and subsequently cut into four parts each having an angular extension of 90°, or substantially of 90°.

According to another point of view, with particular advantage, as will be nevertheless better understood from the continuation of the present description, in the present annular connecting element, corresponding jaws 2, 2/A, 2/B 2/C are provided which are suitable for concentric clamping, all around the circumference of the flexible hose 3, which jaws 2, 2/A, 2/B 2/C have a radius of curvature, or diameter of the internal surface, in particular of the radially internal edge of the corresponding barbs 10 for the engagement of the flexible hose 3, which corresponds to, or coincides, with the radius of curvature, or diameter, of the same flexible hose 3, or of the corresponding part thereof, when this flexible hose is in a radially crushed or compressed condition, that is in the condition in which the same flexible hose 3 shows a reduced thickness, i.e. a radial distance between its corresponding external and internal surfaces which is reduced, and especially when it shows a thickness reduced by 20% with respect to the rest, but not compressed, condition of the same flexible hose.

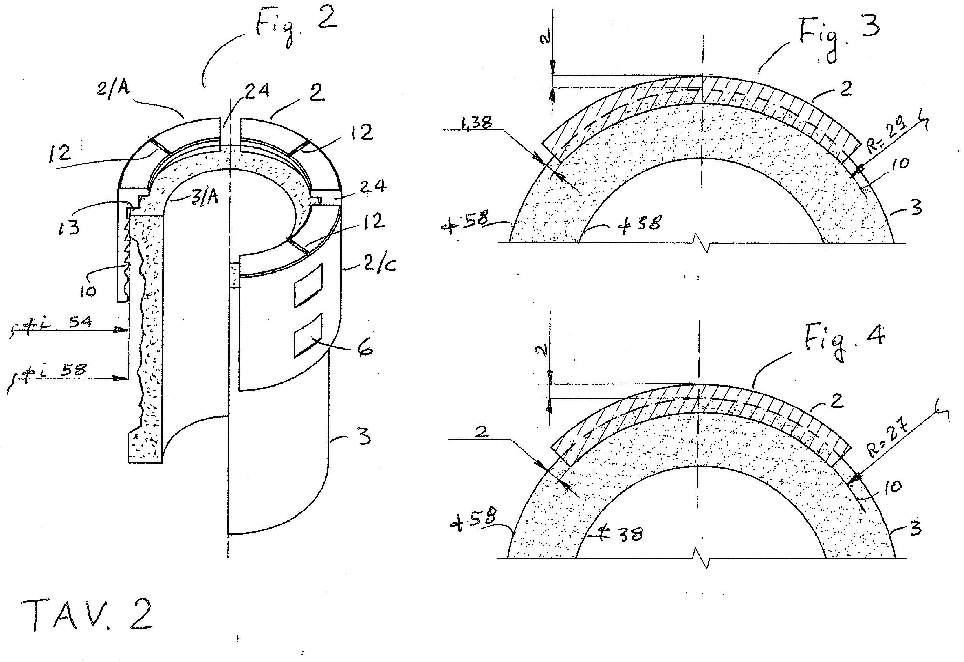

In practice, in order to clamp in a concentric manner and according to protocol, as fully described in the continuation of this description, the jaws, that is the internal turning diameter of the jaws or of the barbs of the same jaws, must be equivalent to the external diameter of the hose that it is to be used, and before it is crushed, minus a certain percentage, preferably 20% of its radial thickness, as can be seen from Figures 2 to 4, in which 58 indicates the external diameter of the hose, and 54 indicates the internal diameter of the jaws, that is of the barbs of the same jaws.

As will be nevertheless better understood from the continuation of the present description, the present annular element has an advantageous jaw clamping body.

Advantageously, as will be nevertheless better understood from the continuation of the present description, the jaw clamping body is provided with corresponding threaded holes 5, circumferentially distributed and preferably angularly spaced by 90° from each other so as to receive the corresponding screws 21, preferably of the Allen type, for insertion, which, in particular once they are in abutment, 21/A, with a flat surface 9, of the same jaw clamping body, push the jaws 2, 2/A, 2/B, 2/C against the circumference of the hose 3, compressing it as necessary.

Advantageously, as will be nevertheless better understood from the continuation of the present description, said threaded holes 5 extend radially.

Advantageously, as will be nevertheless better understood from the continuation of the present description, at the respective angular tightening position, in the jaw clamping body, a first and a second threaded holes 5, 5 longitudinally or axially, spaced apart from each other, are provided for the insertion of corresponding first and second screws 21, 21 for engaging and pushing the respective jaw at respective positions 6, 6, on the respective jaw, which are longitudinally or axially spaced apart from other.

With particular advantage, as will be nevertheless better understood from the continuation of the present description, said jaw clamping body comprises, or consists of, a first and a second rings 4, 16, coaxial to each other, of which the first one 4 being placed inside of the second one 16.

Advantageously, as will be nevertheless better understood from the continuation of the present description, said first ring 4 is metallic.

Advantageously, as will be nevertheless better understood from the continuation of the present description, said second ring is made of plastic material 16, which preferably lightens the weight of the assembly.

With advantage, as will be nevertheless better understood from the continuation of the present description, the first ring, preferably metallic, 4, is provided with corresponding threaded holes 5, all around its circumference and angularly spaced by 90° from each other.

Advantageously, as will be nevertheless better understood from the continuation of the present description, the second ring 16 is such as to contain the head of the screws 21, which otherwise would protrude around the ring 4.

Advantageously, as will be nevertheless better understood from the continuation of the present description, the second ring, preferably made of plastic material, 16, is provided with corresponding holes 8, all around its circumference angularly spaced by 90° from each other and adapted to receive or contain the head of the tightening screws 21.

With particular advantage, as will be nevertheless better understood from the continuation of the present description, in compliance with a second preferred embodiment of the jaw clamping body, this comprises a single ring 20, preferably made of metallic material, and optionally also of light alloy such as aluminum or other.

Advantageously, as will be nevertheless better understood from the continuation of the present description, said single ring 20 comprises corresponding threaded holes 5, all around its circumference, preferably angularly spaced by 90° from each other, and corresponding holes 8, of greater diameter, on the radial extension of said threaded holes 5, in particular so as to contain the head of the screws 21, which otherwise would protrude around the ring 4.

Advantageously, as will be nevertheless better understood from the continuation of the present description, the entire jaw clamping body is preferably covered with an external, in particular elastomeric, hood 17.

From said Figure 1, it can therefore be noted that substantially the annular connecting element applicable to the end of a corresponding flexible hose, essentially comprises four hose clamping jaws 2, 2/A, 2/B, 2/C and an annular jaw clamping body 4, or 20, which we shall better describe later by observing the other figures in detail.

Specifically, the four hose clamping jaws and fitting are clamped around the hose 3, concentrically, by tightening the screws 21, against the flat surface 6, of the same jaws 2, 2/A, 2/B, 2/C.

It is now important to highlight a not negligible peculiarity of the present element, namely the fact of clamping the hose concentrically around its entire circumference.

To better explain this peculiarity, use will be made also of the following Figures 3 and 4.

It must be premised that the laboratory tests tell us that the radial pressing of a flexible hose, in order to be reliable in the functions of its operation, must be equivalent to 20% of the radiable thickness of the hose.

This datum is to be considered very important since: a lower pressing, especially in the presence of high pressures inside the hose, can cause the extraction of hose from the fitting.

Vice versa, with an excessive pressing the barbs of the fittings and of the press-on bushings, can cut the hose itself making it unreliable.

Having said all this, going into even more detail in Figures 2, 3 and 4, an example with four hose clamping jaws 2, 2/A, 2/B, 2/C, originally made with different internal diameters of the barbs of Figure 2, in particular internal diameter 54 and internal diameter 58 has been made.

Now positioning the different jaws, as shown in Figures 3 and 4 on a section of flexible hose having the same diameter, internal 38 and external 58 diameter, graphically simulating the crushing of the jaws around the circumference of the hose, that is 20% of its thickness radial, the ideal compression for this section of hose, is to be considered equivalent to 2 mm.

If it is now wished to exert a concentric crushing around the entire circumference of the hose, the choice of the internal diameter of the barbs shall be:
"external hose diameter (58) - (minus) recommended radial crushing (2 mm) = internal barb diameter (54)".

By observing Figure 4 in detail, it can be noted that the 2 mm crushing, by positioning the four jaws around the circumference of the hose, will be concentric thereto.

It would have been different, if we had used the internal diameter of the barbs, equal to the external diameter of the hose.

In this case, Figure 3 shows us that the crushing of our jaws around the circumference of the hose will be substantially different; on the four central points of the jaws, as per protocol, (2 mm) and on the eight lateral points of the jaws (1.38 mm), i.e. lower than the safety protocol.

In conclusion, with this clarification, we wanted to highlight the peculiarity of the present element, that is, to always clamp the jaws around the chosen hose in a concentric way to its circumference.

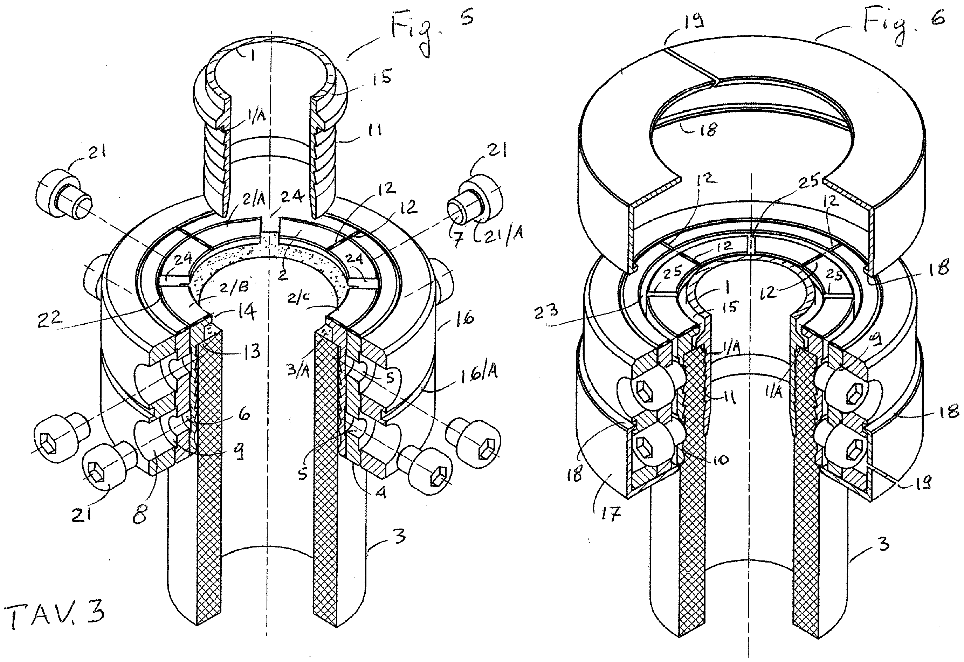

By observing now Figure 5, it can be observed the present element being applied to the chosen hose. By describing its application in sequence, we will begin by positioning the jaws 2, 2/A, 2/B, 2/C, resting the abutment 13, on the edge 3/A of the hose 3, at this point, we will insert around the four jaws the ring 4, on which we will have already inserted the further ring 16, and we will align them to the jaws 2, 2/A, 2/B, 2/C, using the reference notches 12, indicated in the centre of the jaws and on the ring 4, corresponding with the centre of the holes 5, and 8, of the annular elements 4, 16.

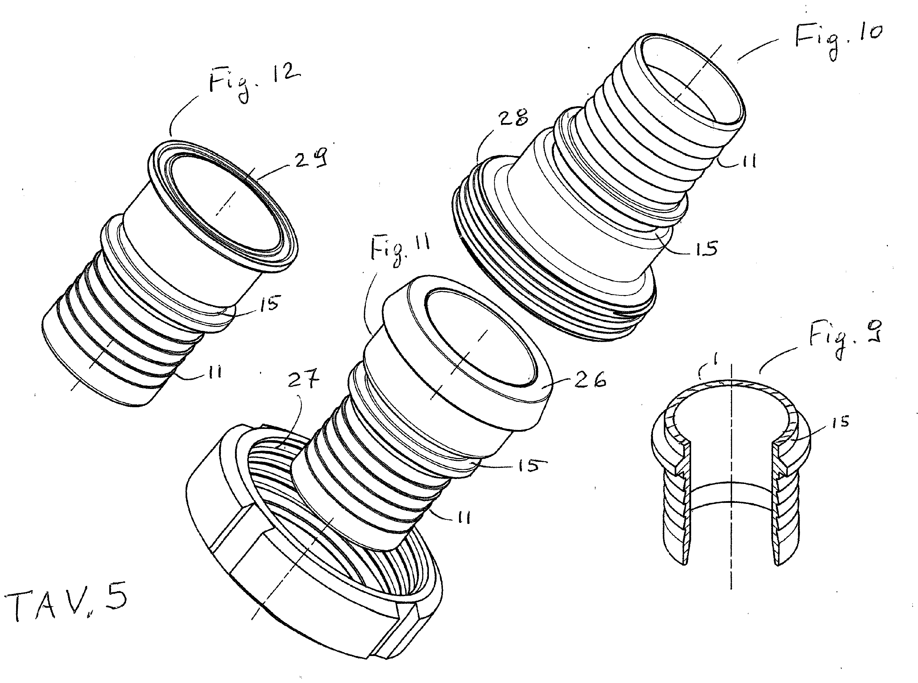

Finally, we will insert inside the hose 3, the desired fitting as can be seen from Figures 10 to 12.

As an example, in tables 1, 3, 4, 5, a weld-on fitting 1 was used, in abutment 1/A, on the edge 3/A of the hose was used.

Once all the component elements have been positioned, we will begin anchoring the fitting to the flexible hose, screwing the screws 21, in abutment 21/A against the flat face 9, of the ring 4.

At the same time, the screw 21, with its flat front part 7, will push the jaws 2, 2/A, 2/B, 2/C against the flat abutment 6, crushing them against the outside of the hose 3 as per protocol.

It is obvious that the stroke of the screw 21 is determined and required by the abutment 9, which, with the flat part 21/A of the screw 21, will act as the end of the stroke.

We move on now to Figure 6, which shows us in practice the successful anchoring of the hose with the barbs 11, of the internal fitting and 10, of the external jaws.

At the end of the technical description of Figures 5 and 6, it is good to further highlight the concentric closure of the four jaws, by displaying the gap 24 between one jaw and the other, in Figure 5, before clamping the screws 21, and in Figure 6, after clamping the screws 21, marking it with the reference number 25.

Finally, as is already the case in the whole bushings to be crimped, for further safety, also in this element, the protrusion 14, of the four jaws, will enter, after tightening of the screws 21, into the groove 15 of the fittings.

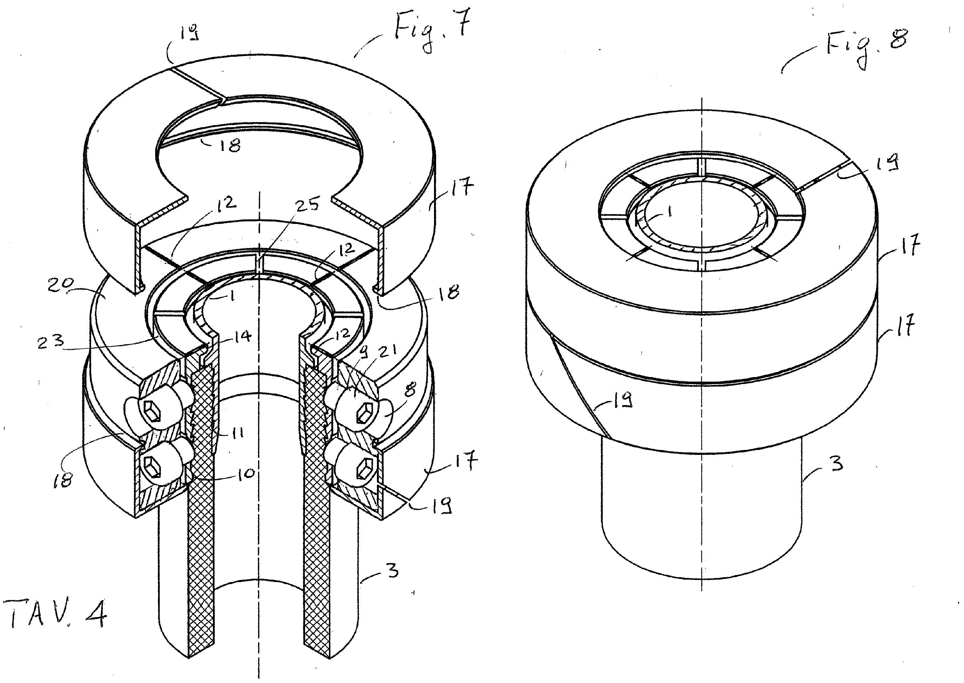

Entering now the specific variant Figure 7, we can assert that with this variant, substantially and conceptually, the principle does not change; only the construction technique of the external jaw clamping ring changes, which in this case Figure 7 is made as a single body 20.

More specifically, it was wished to diversify this technical choice to better comply with the various applications on the market; for example: the pharmaceutical and food industries prefer having everything that concerns fittings or applications in general in stainless steel or with certified plastic materials; the industries in the oleodynamic or hydraulic sector, not being tied to binding regulations, can also use materials such as aluminum or other light alloys as long as they are suitable for the specific use.

In our case, we have chosen to comply with the two variants where: Figures 5 and 6 show this element with two jaw clamping rings 4, 16, respectively made of stainless steel and certified plastic material to reduce costs and weight of the assembly.

In Figure 7, it was chosen to make this element with a single jaw clamping ring entirely made of stainless steel or other suitable material; for example anodized aluminum.

In both cases, of Figure 4 and Figure 7, the final purpose does not change as long as both cases are suitable for use in the present annular connecting element.

As a further variant, the respective jaw clamping ring can have more or fewer screws arranged on the same axis according to the needs of the specific hose to be anchored.

Finally, the connecting element can, if necessary, be covered with a shockproof hood 17, made of elastomeric material, and shown in Figures 6, 7 and 8.

The hood, thus defined, is cut on one side 19, to facilitate the assembly and coupling 18 thereof, in the circular seat 16/A of the jaw clamping ring.

In conclusion, the jaw and hose clamping ring, in a concentric way, specific for recoverable hydraulic fittings, according to the invention, can be made with different materials and geometries as well as variants, which must however, using the invention, be considered all falling within the scope of the present invention.

## Claims

1. Annular connecting element applicable to the end of a corresponding flexible hose, **characterized in that** it comprises four jaws (2, 2/A, 2/B, 2/C), which are suitable for concentric clamping all around the circumference of the flexible hose (3), and a fitting (11) arranged inside, of the same flexible hose.

2. Annular element according to claim 1, **characterized in that** the four jaws (2, 2, 2/A, 2/B, 2/C) have an angular extension of 90°, in particular being obtained from a metal bushing that is turned and subsequently cut into four parts, each having an angular extension of 90°, or substantially of 90°.

3. Annular element according to any one of the preceding claims or according to the pre-characterizing part of claim 1, **characterized in that** corresponding jaws (2, 2/A, 2/B 2/C) are provided which are suitable for concentric clamping, all around the circumference of the flexible hose (3), which jaws (2, 2/A, 2/B 2/C) have a radius of curvature, or diameter of the internal surface, in particular of the radially internal edge of the corresponding engagement barbs of the flexible hose, which corresponds or coincides with the radius of curvature, or diameter, of the same flexible hose (3), when this is in a radially crushed or compressed condition, that is in the condition in which the same flexible hose (3) shows a reduced thickness, i.e. a radial distance between its corresponding external and internal surfaces which is reduced, and especially when it shows a thickness reduced by 20% with respect to the rest, but not compressed, condition of the same flexible hose.

4. Annular element according to any one of the preceding claims or according to the pre-characterizing part of claim 1, **characterized in that** it has a jaw clamping body.

5. Annular element according to claim 4, **characterized in that** the jaw clamping body is provided with corresponding threaded holes (5), circumferentially distributed and preferably angularly spaced by 90° from each other so as to receive corresponding screws (21), preferably of the Allen type, for insertion, which, in particular once they are in abutment, (21/A), with a flat surface (9), push the jaws (2, 2/A, 2/B, 2/C) against the circumference of the hose (3), compressing it as necessary.

6. Annular element according to claim 5, **characterized in that** said threaded holes (5) extend radially.

7. Annular element according to any one of the preceding claims 5 and 6, **characterized in that**, at the respective angular tightening position, a first and a second threaded holes (5, 5) longitudinally spaced apart from each other are provided for the insertion of corresponding first and second screws (21, 21) for engaging and pushing the respective jaw at respective positions, on the respective jaw, which are longitudinally spaced from each other.

8. Annular element according to any one of the preceding claims from 4 to 7, **characterized in that** said jaw clamping body comprises, or consists of, a first and a second rings (4, 16), coaxial to each other, of which the first one (4) being placed inside the second one (16).

9. Annular element according to claim 8, **characterized in that** said first ring (4) is metallic; and/or **in that** said second ring is made of plastic material (16), which preferably lightens the weight of the assembly.

10. Annular element according to any one of the preceding claims 8 and 9, **characterized in that** the first ring, preferably metallic, (4), is provided with corresponding threaded holes (5), all around its circumference and angularly spaced by 90° from each other.

11. Annular element according to any one of claims 8 to 10, **characterized in that** the second ring (16) is such as to contain the head of the screws (21), which otherwise would protrude around the ring (4).

12. Annular element according to claim 11, **characterized in that** the second ring, preferably made of plastic material, (16), is provided with corresponding holes (8), all around its circumference angularly spaced by 90° from each other and adapted to receive o contain the head of the tightening screws (21).

13. Annular element according to any one of the preceding claims from 4 to 7, **characterized in that** the jaw clamping body comprises a single ring (20), preferably made of metallic material, optionally also of light alloy such as aluminum or other.

14. Annular element according to claim 13, **characterized in that** said single ring (20) comprises corresponding threaded holes (5), all around its circumference, preferably angularly spaced by 90° from each other, and corresponding holes (8), of greater diameter, on the radial extension of said threaded holes (5), in particular so as to contain the head of the screws (21), which otherwise would protrude around the ring (4).

15. Annular element according to any one of the preceding claims from 4 to 14, **characterized in that** the entire jaw clamping body is covered with an external, in particular elastomeric, hood (17).
